# EUROPÄISCHE PATENTSCHRIFT

(11) **EP 4 143 040 B1**
(45) Veröffentlichungstag und Bekanntmachung des Hinweises auf die Patenterteilung: **01.07.2026**
(21) Anmeldenummer: 21722394.0
(22) Anmeldetag: 26.04.2021
(51) Int. Cl.: B60G 11/16, F16F 1/12, F16F 1/13

(54) **FEDERANORDNUNG FÜR EIN FAHRWERK, FAHRZEUGFAHRWERK UMFASSEND EINE FEDERANORDNUNG, VERFAHREN ZUM HERSTELLEN EINER FEDERANORDNUNG FÜR EIN FAHRZEUGFAHRWERK**
SPRING ASSEMBLY FOR A CHASSIS, VEHICLE CHASSIS COMPRISING A SPRING ASSEMBLY, METHOD FOR PRODUCING A SPRING ASSEMBLY FOR A VEHICLE CHASSIS
ENSEMBLE RESSORT POUR UN CHÂSSIS, CHÂSSIS DE VÉHICULE COMPRENANT UN ENSEMBLE RESSORT, PROCÉDÉ DE FABRICATION D'UN ENSEMBLE RESSORT POUR UN CHÂSSIS DE VÉHICULE

(30) Priorität: 27.04.2020 DE 102020205313
(43) Veröffentlichungstag der Anmeldung: 08.03.2023
(73) Patentinhaber: ThyssenKrupp Federn und Stabilisatoren GmbH, 58119 Hagen (DE); thyssenkrupp AG, 45143 Essen (DE)
(72) Erfinder: WESTERHOFF, Karsten, 45525 Hattingen (DE); SCHRAGE, Jan-Yves, 57439 Attendorn (DE); GROSS, Marcel, 44359 Dortmund (DE)
(74) Vertreter: thyssenkrupp Intellectual Property GmbH
(86) Internationale Anmeldenummer: PCT/EP2021/060770
(87) Internationale Veröffentlichungsnummer: WO 2021/219522

(56) Entgegenhaltungen:
- EP-A1- 3 495 177
- EP-A1- 4 130 506
- WO-A1-2019/238959
- DE-A1- 102005 050 023
- DE-A1- 102008 046 939
- DE-A1- 102009 052 030
- DE-A1- 102015 208 978
- DE-A1- 102016 200 307
- DE-A1- 102017 202 212
- FR-A1- 2 637 338
- JP-A- H10 315 731

## Beschreibung

Die vorliegende Erfindung betrifft einer Federanordnung für ein Fahrwerk, ein Fahrzeugfahrwerk umfassend eine Federanordnung, ein Verfahren zum Herstellen einer Federanordnung für ein Fahrzeugfahrwerk.

### Stand der Technik

Federanordnungen für Fahrwerke sind im Stand der Technik in einer Vielzahl von Ausführungsformen bekannt. Als Feder kommen meist Schraubenfedern zum Einsatz, welche beispielsweise auch als gewundene Torsionsfedern, insbesondere Druckfedern bezeichnet werden, die aus Federdraht mehr oder weniger zylinderförmig gewickelt sind. Diese Schraubenfedern dienen für Fahrwerke als elastische Verbindung von Radachsen und Fahrzeugaufbau. Solche Schraubenfedern tragen meist zusammen mit weiteren Vorrichtungen zur Verbesserung des Fahrkomforts bei, indem sie den Fahrzeugaufbau und Fahrzeuginsassen vor von Fahrbahnunebenheiten hervorgerufenen Stößen und hieraus resultierenden Schwingungen schützen. Des Weiteren tragen solche Schraubenfedern, insbesondere bei hoher Fahrgeschwindigkeit für eine optimierte Fahrdynamik, das heißt für möglichst gleichmäßige Bodenhaftung der Räder und damit insbesondere zur Fahrsicherheit bei. Diese Schraubenfedern sind insbesondere zum Schutz gegen Umwelteinflüsse, welche beispielsweise Korrosion hervorrufen können, mit einer Schutzschicht, insbesondere einem Lack versehen. Die Feder ist auf einer Federaufnahme zur Führung der Feder und zur Geräuschdämmung angeordnet. Auf der der Feder abgewandten Seite der Federaufnahme ist ein Federteller angeordnet, auf welchem sich die Feder über die Federaufnahme abstützt. Problematisch ist es, wenn Schmutz in den Bereich zwischen der Feder und der Federaufnahme eindringt und insbesondere durch Abrasion den Lack der Feder derart beschädigt, dass die Oberfläche des Federdrahts zugänglich für Umwelteinflüsse und anfällig für Korrosion wird. Unter Langzeitwirkung von Umwelteinflüssen und starker Korrosion kann dies auch zum Bruch der betroffenen Schraubenfeder führen. Beispielsweise fehlt durch das ständige Arbeiten in der unteren Unterlage durch die Fahrzeugbewegungen an der untersten Windung der Druckfeder der Lack und es sind durch Umwelteinflüsse Rostschäden vorhanden, welche die Feder zusätzlich schwächen und einen Federbruch begünstigen.

Aus der DE 10 2015 208 978 ist eine Federanordnung mit einer Klebeschicht bekannt, welche die Feder mit der Federaufnahme verklebt.

Aus der WO 2019/238959 ist eine Schraubenfeder bekannt, an deren Endwindung ein Grundkörper eines Schraubenfederisolators aus einem elastisch verformbaren Material ausgebildet und zur Auflage auf einem Federteller einer Kraftfahrzeugfederung eingerichtet ist.

Aus der EP 4 130 506, Stand der Technik nach Artikel 54(3) EPÜ, ist eine Schraubenfedervorrichtung bekannt, bei der das untere Ende der Schraubenfeder an der Innenfläche einer Stütznut eines die Schraubenfeder umgebenden Isolators haftet.

Der vorliegenden Erfindung liegt daher die Aufgabe zugrunde, eine verbesserte Federanordnung und ein verbessertes Verfahren zum Herstellen einer Federanordnung bereitzustellen, bei welchem die zuvor genannten Nachteile vermieden werden. Insbesondere soll mit dieser verbesserten Federanordnung und dem verbesserten Verfahren zum Herstellen einer Federanordnung die Anfälligkeit von aus Schmutzeintrag in einer Federanordnung resultierender Korrosionsanfälligkeit und insbesondere hieraus resultierendem Bruch der Schraubenfeder reduziert werden. Insbesondere sollen durch Abrasion hervorgerufenen Lackbeschädigungen von der Schraubenfeder einer Federanordnung wenigstens teilweise reduziert werden. Des Weiteren soll mit dem verbesserten Verfahren zum Herstellen einer Federanordnung ein stabiler Fertigungsprozess zur Verfügung gestellt werden. Zudem soll das verbesserte Verfahren zum Herstellen einer Federanordnung einfach und sicher in bereits bestehende Verfahren implementiert werden können.

### Offenbarung der Erfindung

Diese Aufgabe wird mit einer Federanordnung nach Anspruch 1, einem Fahrzeugfahrwerk nach Anspruch 13 und einem Verfahren zum Herstellen einer Federanordnung nach Anspruch 14 gelöst.

Die erfindungsgemäße Federanordnung weist gegenüber konventionellen Federanordnungen den Vorteil auf, dass die Federanordnung gegenüber Umwelteinflüssen, insbesondere Schmutz besser geschützt ist und durch Abrasion hervorgerufen Lackbeschädigungen der Schraubenfeder teilweise reduziert sind oder nicht vorkommen, was Anfälligkeit gegen Bruch der Schraubenfeder verringert und die Langlebigkeit erhöht.

Das erfindungsgemäße Verfahren zum Herstellen einer Federanordnung weist gegenüber konventionellen Verfahren den Vorteil auf, dass der Gesamtprozess optimiert, insbesondere zeitlich schneller, beispielsweise auch durch Einsparung von aufwendigen Zwischenschritten, und automatisiert werden kann. Ein weiterer Vorteil des erfindungsgemäßen Verfahrens ist, dass es in bereits bestehende Verfahren einfach und zuverlässig integriert werden kann.

Gegenstand der Erfindung ist daher eine Federanordnung für ein Fahrzeugfahrwerk umfassend eine Feder, insbesondere mit einer Beschichtung, eine Federaufnahme und eine Zwischenschicht, wobei die Zwischenschicht zwischen der Feder und der Federaufnahme angeordnet ist, wobei die Zwischenschicht mit der Feder, insbesondere der Beschichtung, auf der der Feder zugewandten Seite wenigstens stoffschlüssig verbunden ist und die Zwischenschicht auf der der Feder abgewandten Seite an der Federaufnahme ganz oder teilweise anliegt und eine andere als eine stoffschlüssige Verbindung mit der Federaufnahme aufweist, wobei die andere als eine stoffschlüssige Verbindung eine formschlüssige Verbindung ist, wobei die formschlüssige Verbindung ausgebildet ist mit einem positiv-Element und einer negativ-Aufnahme, welche das positive-Element aufnimmt, wobei die Zwischenschicht als positiv-Element aufgenommen ist in Kavitäten der Federaufnahme, welche die negativ-Aufnahme ausbilden oder wobei Vorsprünge mit Hinterschneidungen der Federaufnahme das positiv-Element ausbilden, und Kavitäten in der Zwischenschicht die negativ-Aufnahme ausbilden, wobei die Federaufnahme ausgebildet ist, sich auf einem Federteller abzustützen, wobei die Federaufnahme einen klebstoffabweisenden Aufnahmebereich für die Feder aufweist.

Ein weiterer Gegenstand der Erfindung ist ein Fahrzeugfahrwerk umfassend eine Federanordnung.

Ein weiterer Gegenstand der Erfindung ist ein Verfahren zur Herstellung einer Federanordnung für ein Fahrzeugfahrwerk mit einer Feder und einer Federaufnahme umfassend die folgenden Schritte:
a) Bereitstellen einer Feder, insbesondere mit einer Beschichtung;
b) Bereitstellen einer Federaufnahme mit einem klebstoffabweisenden Aufnahmebereich zur Aufnahme der in Schritt a) bereitgestellten Feder;
c) Bereitstellen eines Füllmittels;
d) Auftragen des in Schritt c) bereitgestellten Füllmittels auf die in Schritt a) bereitgestellte Feder und/oder den klebstoffabweisenden Aufnahmebereich der in Schritt b) bereitgestellten Federaufnahme;
e) Herstellen einer Zwischenschicht zwischen der Feder und der Federaufnahme durch in Kontakt bringen
   i. der in Schritt a) bereitgestellten Feder mit dem in Schritt d) mit Füllmittel aufgetragenen klebstoffabweisenden Aufnahmebereich der Federaufnahme oder
   ii. der in Schritt d) mit Füllmittel aufgetragenen Feder mit dem klebstoffabweisenden Aufnahmebereich der in Schritt b) bereitgestellten Federaufnahme oder
   iii. der in Schritt d) mit Füllmittel aufgetragenen Feder mit dem in Schritt d) mit Füllmittel aufgetragenen klebstoffabweisenden Aufnahmebereich der Federaufnahme;
f) Ausbilden einer stoffschlüssigen Verbindung, insbesondere einer Klebeverbindung zwischen der in Schritt e) hergestellten Zwischenschicht mit der Feder,
wobei zwischen der Federaufnahme, insbesondere des klebstoffabweisenden Aufnahmebereichs und der in Schritt e) hergestellten Zwischenschicht eine andere Verbindung als eine stoffschlüssige Verbindung erfolgt.

Die Erfindung kann sowohl in der Federanordnung als auch in einem Fahrzeugfahrwerk umfassend eine Federanordnung als auch in einem Verfahren zum Herstellen einer Federanordnung verwirklicht sein.

### Detaillierte Beschreibung der Erfindung

Eine bevorzugte Ausführungsform der Erfindung ist eine Federanordnung für ein Fahrzeugfahrwerk umfassend eine Feder, insbesondere mit einer Beschichtung, eine Federaufnahme und eine Zwischenschicht, wobei die Zwischenschicht zwischen der Feder und der Federaufnahme angeordnet ist, wobei die Zwischenschicht mit der Feder, insbesondere der Beschichtung, auf der der Feder zugewandten Seite wenigstens stoffschlüssig verbunden ist und die Zwischenschicht auf der der Feder abgewandten Seite an der Federaufnahme ganz oder teilweise anliegt und eine andere als eine stoffschlüssige Verbindung mit der Federaufnahme aufweist.

Unter einer anderen als einer stoffschlüssigen Verbindung im Sinne der vorliegenden Erfindung wird insbesondere eine kraftschlüssige Verbindung, eine formschlüssige Verbindung oder eine Kombination hiervon verstanden. Beispielsweise kann eine formschlüssige Verbindung ausgebildet sein mit einem positiv-Element und einer negativ-Aufnahme, welche das positive-Element aufnimmt, wobei beispielsweise die Zwischenschicht als positiv-Element aufgenommen ist in Kavitäten, insbesondere im Aufnahmebereich der Federaufnahme, welche die negativ-Aufnahme ausbilden. Beispiele für Kavitäten in der Federunterlage sind Einstülpungen, Vertiefungen, Rillen, Riefen, Nuten, insbesondere T-Nuten, Schwalbenschwanz-nuten, Bohrungen, Sacklöcher, Hinterschneidungen oder einer Kombination hiervon. Beispielsweise kann das Füllmittel, aus welchem die Zwischenschicht ausgebildet wird, in vorgenannte Kavitäten hineinfließen, womit die ausgebildete Zwischenschicht in den Kavitäten verankert ist. Beispielsweise können positiv-Element und negativ-Aufnahme auch anders herum ausgebildet sein, wobei Vorsprünge, insbesondere Ausstülpungen beispielsweise mit Hinterschneidungen der Federaufnahme das positiv-Element ausbilden, welches in einer negativ-Aufnahme, welche das positive-Element aufnimmt, wobei Kavitäten in der Zwischenschicht die negativ-Aufnahme ausbilden. Von der Erfindung sind auch alle Kombinationen der vorgenannten Ausführungsformen umfasst.

Im Rahmen der vorliegenden Erfindung werden unter stoffschlüssigen Verbindung solche Verbindungen verstanden, bei denen die Verbindungspartner durch atomare oder molekulare Kräfte zusammengehalten werden, wie beispielsweise bei Klebeverbindung, Vulkanisieren oder einer Kombination hiervon.

In einer bevorzugten Ausführungsform der Erfindung ist die andere als eine stoffschlüssige Verbindung eine kraftschlüssige Verbindung und/oder eine formschlüssige Verbindung.

Im Rahmen der vorliegenden Erfindung wird unter einer Druckfeder eine Feder verstanden, welche wenigstens auf Druckbeanspruchung reagiert. Beispielsweise ist eine Druckfeder eine gewundene Torsionsfeder, insbesondere eine Schraubendruckfeder.

Nach einer bevorzugten Ausführungsform der Erfindung ist die Federaufnahme aus einem Kunststoff, insbesondere einem elastischen Kunststoff ausgewählt aus einer Gruppe von Elastomeren oder elastomerhaltigen Kunststoffen, insbesondere Polyurethan, Acrylnitril-Butadien-Acrylat, Acrylnitril-chloriertes Polyethylen-Styrol, Acrylnitril-Methylmethacrylat, Butadien-Kautschuk, Butylkautschuk, Chloropren-Kautschuk, Ethylen-Ethylacrylat-Copolymer, Ethylen-Propylen-Dien-Kautschuk, Ethylenvinylacetat, Fluorkautschuk, Isopren-Kautschuk, Naturkautschuk, Polyisobutylen, Polyvinylbutyral, Silikon-Kautschuk, Styrol-Butadien-Kautschuk, Vinylchlorid-Ethylen, Vinylchlorid-Ethylen-Methacrylat oder einer Kombination hiervon.

In einer bevorzugten Ausführungsform der Erfindung ist die Zwischenschicht elastisch ausgebildet, insbesondere ein elastischer Dichtstoff, ein elastischer Klebstoff oder eine Kombination hiervon und umfasst insbesondere eine Zusammensetzung, welche ausgewählt ist aus einer Gruppe von Acrylaten, Epoxidharzen, Polyurethanen, Silikonen, Silan-Hybridsystemen, Polysulfiden oder einer Kombination hiervon.

Im Rahmen der Erfindung kann die Zwischenschicht beispielsweise als Klebeschicht bezeichnet werden, insbesondere, weil die Zwischenschicht mit der Feder, insbesondere der Beschichtung auf der der Feder zugewandten Seite wenigstens stoffschlüssig verbunden, insbesondere verklebt, anvulkanisiert oder eine Kombination hiervon ist.

Ein Vorteil besteht darin, dass die elastische Zwischenschicht, insbesondere als eine verhältnismäßig weiche Klebeschicht im Belastungsfall einen Teil der in die Anordnung eingeleiteten Energie unter elastischer Verformung aufnehmen kann. Es wird ein günstiger Dehnungsgradient erreicht, da der Kleber zwischen der Beschichtung der Feder und der elastischen Federaufnahme eine flexible Schicht bildet. Insbesondere wird die Beanspruchung in der Grenzschicht zwischen der Federaufnahme und dem Klebstoff gesenkt. Somit liegen in diesem Bereich zwischen der Klebeschicht und der Federaufnahme verhältnismäßig geringe Verzerrungen vor, so dass ein belastungsbedingter Verschleiß besonders gering ist.

Gemäß einer bevorzugten Ausführungsform der Erfindung ist die Härte der Zwischenschicht geringer als die Härte der Beschichtung der Feder. Insbesondere verhindert die gegenüber der Federbeschichtung weichere Zwischenschicht, insbesondere Klebeschicht, dass die Federbeschichtung bei hohen Belastungen beschädigt wird.

Mit Härte der Zwischenschicht, insbesondere Klebeschicht ist insbesondere die messbare Härte der Zwischenschicht in ausgehärtetem Zustand des Klebers gemeint. Zur Messung der Härte kann beispielsweise die Indentationsmethode verwendet werden. Bei dieser Methode dringt ein Eindringkörper, auch Indenter genannt, definierter Geometrie in das zu untersuchende Material ein, wobei der Werkstoff des Indenters wesentlich härter ist als die Probe selbst. Unabhängig von der Geometrie des Eindringkörpers ist jeder Eindringtiefe eine Kraft zuzuordnen. Der Quotient aus beiden Größen stellt ein Maß für die Härte beziehungsweise die Steifigkeit der Probe dar. Bekannte Indentationsmethoden für Kunststoffe sind beispielsweise die Shore-A-Methode beziehungsweise die Shore-D-Methode. Die Härte von Metallen kann beispielsweise nach Vickers beziehungsweise Brinell ermittelt werden. Dabei werden durch einen Eindringkörper plastische Deformationen erzeugt, die mittels Lichtmikroskopie ausgemessen und aus denen mit Hilfe der Kontaktfläche, der zugehörigen Kraft und Eindringtiefe die Härte bestimmt werden.

Nach einer bevorzugten Ausführungsform der Erfindung beträgt die Härte der Zwischenschicht maximal 70 Shore-D.

Die Federaufnahme besteht vorzugsweise aus einem elastischen Kunststoff, insbesondere einem Elastomer oder einem Elastomer haltigen Kunststoff, beispielsweise einem Kautschuk, wobei prinzipiell auch Thermoplaste oder Duroplaste als Material für die Federaufnahme verwendbar sind.

Insgesamt ist es günstig, dass die Härte der verwendeten Werkstoffe ausgehend von der Feder, die vorzugsweise aus einem härtbaren Federstahl besteht, bis zum elastischen Aufnahmekörper über die zwischengeschalteten Schichten schrittweise abnimmt. Hierdurch kann auch in die Feder eingeleitete Energie stufenweise aufgenommen werden, wobei die elastische Zwischenschicht, insbesondere Klebeschicht durch Verformung einen Teil der Energie aufnehmen kann. Insgesamt ergibt sich dadurch ein günstiger Dehnungsgradient zwischen den genannten Bauteilen. Insbesondere kann die Feder eine höhere Härte haben als die Federbeschichtung und/oder die Federbeschichtung kann eine höhere Härte haben als die Zwischenschicht, insbesondere Klebeschicht und/oder die Zwischenschicht, insbesondere Klebeschicht kann eine höhere Härte haben als die Federaufnahme.

Entsprechend kann nach einer Weiterbildung vorgesehen sein, dass auch die Steifigkeit von der Feder, über die Federbeschichtung, weiter über die Zwischenschicht, insbesondere Klebeschicht bis zur Federaufnahme abnimmt. Insbesondere kann die Feder eine höhere Steifigkeit haben als die Federbeschichtung und/oder die Federbeschichtung kann eine höhere Steifigkeit haben als die Zwischenschicht, insbesondere Klebeschicht und/oder die Zwischenschicht, insbesondere Klebeschicht kann eine höhere Steifigkeit haben als die Federaufnahme.

Umgekehrt kann die Elastizität von der Feder, über die Federbeschichtung, weiter über die Zwischenschicht, insbesondere Klebeschicht bis zur Federaufnahme zunehmen. Insbesondere kann die Federaufnahme eine höhere Elastizität haben als die Zwischenschicht, insbesondere Klebeschicht und/oder die Zwischenschicht, insbesondere Klebeschicht kann eine höhere Elastizität haben als die Federbeschichtung und/oder kann die Federbeschichtung eine höhere Elastizität haben als die Feder.

Entsprechend kann auch die Bruchdehnung von der Feder, über die Federbeschichtung, weiter über die Zwischenschicht, insbesondere Klebeschicht bis zur Federaufnahme zunehmen.

Die Bruchdehnung charakterisiert die Verformungsfähigkeit beziehungsweise Duktilität eines Werkstoffes. Die Bruchdehnung beschreibt die auf die Anfangsmesslänge einer Probe im Zugversuch bezogene bleibende Längenänderung nach erfolgtem Bruch. Insbesondere kann die Federaufnahme eine höhere Bruchdehnung haben als die Zwischenschicht, insbesondere Klebeschicht und/oder die Zwischenschicht, insbesondere Klebeschicht kann eine höhere Bruchdehnung haben als die Federbeschichtung und/oder kann die Federbeschichtung eine höhere Bruchdehnung haben als die Feder.

Gemäß einer bevorzugten Ausführungsform der Erfindung weist die Zwischenschicht eine Bruchdehnung von mindestens 5%, insbesondere von mindestens 50%, vorzugsweise von mindestens 100% auf.

Eine Obergrenze für die Bruchdehnung der Zwischenschicht, insbesondere Klebeschicht kann beispielsweise bei maximal 300% liegen.

In einer bevorzugten Ausführungsform der Erfindung beträgt die Härte der Beschichtung mindestens 70 Shore-D.

Gemäß einer bevorzugten Ausführungsform der Erfindung beträgt die Härte der Federaufnahme mindestens 50 Shore-A und/oder maximal 80 Shore-A.

Nach einer bevorzugten Ausführungsform der Erfindung weist die Zwischenschicht eine Dicke im Bereich von 0,1mm bis 10,0 mm, vorzugsweise im Bereich von 0,2 mm bis 7,0 mm, besonders bevorzugt im Bereich von 0,3mm bis 5mm, ganz besonders bevorzugt im Bereich von 0,4mm bis 1,5mm auf.

Um eine definierte Schichtdicke der Zwischenschicht, insbesondere Klebeschicht herzustellen können Abstandhalter vorgesehen sein, mit denen eine Oberfläche der Beschichtung und eine Oberfläche der Federaufnahme beabstandet voneinander gehalten werden, wobei der zwischen der Oberfläche der Beschichtung und der Oberfläche der Federaufnahme gebildete Raum zumindest weitestgehend mit der Zwischenschicht, insbesondere Klebeschicht ausgefüllt ist. Mit zumindest weitestgehend soll insbesondere die Möglichkeit mit umfasst sein, dass der zwischen Federaufnahme und Feder gebildete und mit der Zwischenschicht, insbesondere Klebeschicht verfüllte Zwischenraum auch fertigungsbedingte Hohlräume beziehungsweise Lufteinschlüsse aufweisen kann. Vorzugsweise ist der Zwischenraum größtenteils, insbesondere zu mindestens 90% mit Zwischenschicht, insbesondere Klebeschicht verfüllt.

In einer bevorzugten Ausführungsform der Erfindung sind zusätzlich Abstandhalter vorgesehen, mit denen eine Oberfläche der Beschichtung und eine Oberfläche der Federaufnahme beabstandet voneinander gehalten werden, wobei der zwischen der Oberfläche der Beschichtung und der Oberfläche der Federaufnahme gebildete Raum zumindest weitestgehend mit der Zwischenschicht ausgefüllt ist.

Beispielsweise können die Abstandshalter gleichzeitig als positiv-Element zur Ausbildung einer formschlüssigen Verbindung ausgebildet sein. Insbesondere können die Abstandhalter integraler Bestandteil der Federunterlage und/oder als separate, eigenständige Elemente ausgebildet sein.

Gemäß einer bevorzugten Ausführungsform der Erfindung sind die Abstandhalter derart verteilt angeordnet, dass die Feder und die Federaufnahme in axiale Richtung und/oder in radiale Richtung in Bezug auf die Federachse relativ zueinander ausgerichtet sind.

Nach einer bevorzugten Ausführungsform der Erfindung sind die Abstandhalter in Form von Vorsprüngen gestaltet, die von der Oberfläche der Federaufnahme abstehen.

In einer bevorzugten Ausführungsform der Erfindung sind mehrere Abstandhalter in Umfangsrichtung entlang der Windung der Feder und/oder über einen Teilumfang des Federdrahts versetzt zueinander angeordnet.

Gemäß einer bevorzugten Ausführungsform der Erfindung ist die Federaufnahme derart gestaltet, dass die Feder, im Querschnitt durch den Federdraht betrachtet, über einen Umschlingungswinkelbereich von mindestens 30°, vorzugsweise von mindestens 100° in der Federaufnahme aufgenommen und mittels der Zwischenschicht mit der Federaufnahme formschlüssig verbunden ist, wobei die Zwischenschicht in dem Umschlingungsbereich im Wesentlichen eine konstante Dicke aufweist.

In einer bevorzugten Ausführungsform der Erfindung erfolgt das Ausbilden einer stoffschlüssigen Verbindung in Schritt f) in einem Temperaturbereich zwischen 0 bis 60°C, vorzugsweise in einem Temperaturbereich zwischen 5 bis 50°C, besonders bevorzugt in einem Temperaturbereich zwischen 5 bis 40°C erfolgt.

Nach einer bevorzugten Ausführungsform der Erfindung erfolgt das Herstellen einer Zwischenschicht in Schritt e) im Wesentlichen drucklos.

Gemäß einer bevorzugten Ausführungsform der Erfindung umfasst das in Schritt c) bereitgestellte Füllmittel eine Zusammensetzung, welche ausgewählt ist aus einer Gruppe von einem Acrylat, einem Epoxidharz, einem Polyurethan, einem Silikon, einem Silan-Hybridsystem, einem Polysulfid oder einer Kombination hiervon.

In einer bevorzugten Ausführungsform der Erfindung sieht die in Schritt a) bereitstellte Feder und/oder die in Schritt b) bereitgestellte Federunterlage zusätzlich ein Montagehilfeelement vor, welches die Federaufnahme an der Feder mit einem definierten Abstand zumindest vorübergehend befestigt.

In einer bevorzugten Ausführungsform der Erfindung wird in einem weiteren Schritt g) mindestens ein Abstandhalter bereitgestellt, welcher mindestens eine Abstandshalter in einem weiteren Schritt h) zur Beabstandung von Feder und Federunterlage zwischen vorgenannten angeordnet wird in Reihenfolge vor dem in Kontaktbringen beim Herstellen einer Zwischenschicht in Schritt e).

Von der Erfindung sind auch alle Kombinationen aller vorgenannten Ausführungsformen, insbesondere bevorzugten Ausführungsformen umfasst.

### Kurze Beschreibung der Zeichnungen

Die erfindungsgemäße Federanordnung wird anhand der Zeichnung erläutert.
- Fig. 1: zeigt schematisch eine dreidimensionale Ansicht einer Federanordnung gemäß einer Ausführungsform der Erfindung,
- Fig. 2: zeigt schematisch eine Querschnittsansicht in einem Bereich der Federunterlage gemäß der Ausführungsform der Erfindung nach Figur 1,
- Fig. 3: zeigt eine weitere Ausführungsform der Erfindung nach Fig. 2 mit zusätzlichen Abstandhaltern,
- Fig. 4: zeigt eine weitere Ausführungsform der Erfindung nach Fig. 2 mit zusätzlichen Kavitäten.

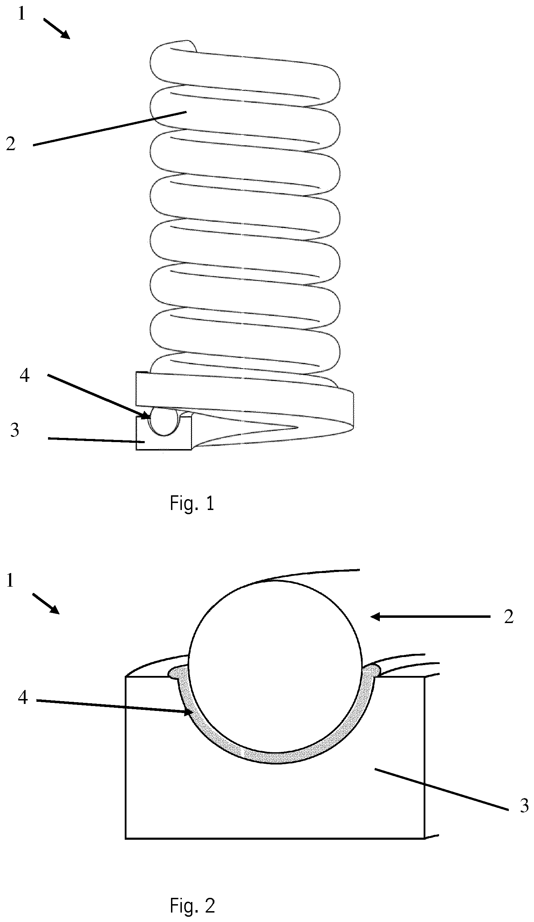

In der Fig. 1 ist einer Federanordnung 1 nach einer Ausführungsform der Erfindung dargestellt umfassend eine Feder 2, insbesondere mit einer Beschichtung, eine Federaufnahme 3 und eine Zwischenschicht 4, wobei die Zwischenschicht 4 zwischen der Feder 2 und der Federaufnahme 3 angeordnet ist. Die Zwischenschicht 4 ist mit der Feder 2, insbesondere der Beschichtung auf der der Feder 2 zugewandten Seite wenigstens stoffschlüssig verbunden und die Zwischenschicht 4 liegt auf der der Feder 2 abgewandten Seite an der Federaufnahme 3 teilweise an.

In der Fig. 2 ist eine Querschnittsansicht in einem Bereich der Federunterlage 3 gemäß der Ausführungsform einer Federanordnung 1 nach Fig. 1 dargestellt.

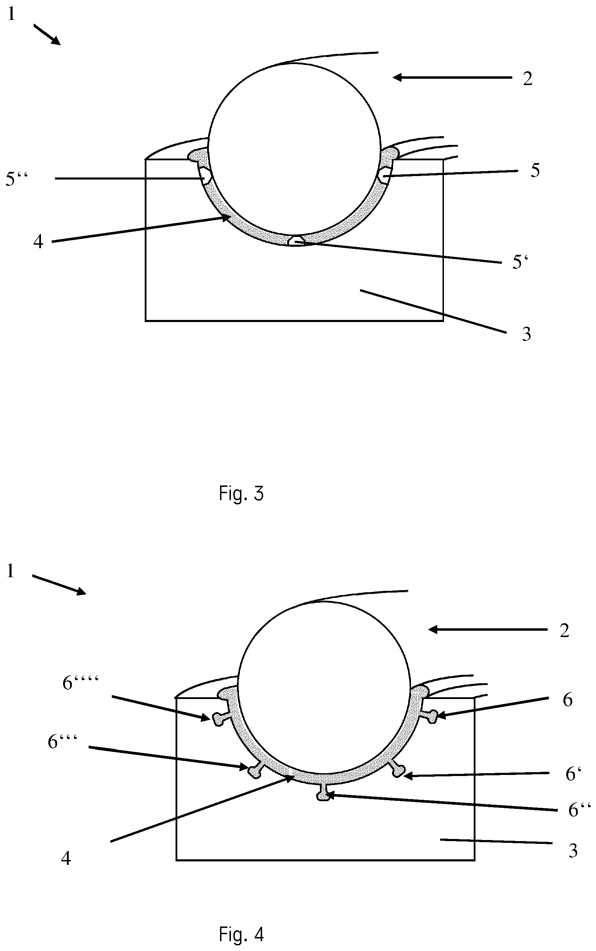

In der Fig. 3 ist eine weitere Querschnittsansicht nach Fig. 2 mit an der Federunterlage 3 zusätzlichen Abstandhaltern 5, 5', 5" dargestellt, mit den Abstandhaltern 5, 5', 5" ist eine Oberfläche der Feder 1, insbesondere Beschichtung der Feder beabstandet zur einer Oberfläche der Federaufnahme 3.

In der Fig. 4 ist eine weitere Querschnittsansicht nach Fig. 2 mit in der Federunterlage 3 angeordneten zusätzlichen Kavitäten 6, 6', 6", 6‴, 6ʺʺ dargestellt. Die Zwischenschicht 4 mit den Kavitäten 6, 6', 6", 6‴, 6ʺʺ der Federaufnahme 3 formschlüssig verbunden, insbesondere verankert.

### Gewerbliche Anwendbarkeit

Federanordnungen der vorbeschriebenen Art werden in der Produktion von Fahrzeugen, insbesondere von Fahrwerken von Kraft- und/oder Schienenfahrzeugen eingesetzt.

### Bezugszeichenliste

- 1: = Federanordnung
- 2: = Feder
- 3: = Federaufnahme
- 4: = Zwischenschicht
- 5, 5', 5": = Abstandhalter
- 6, 6', 6", 6‴, 6ʺʺ: = Kavitäten

## Patentansprüche

1. Federanordnung (1) für ein Fahrzeugfahrwerk, wobei die Federanordnung eine Feder (2), insbesondere mit einer Beschichtung, eine Federaufnahme (3) und eine Zwischenschicht (4) umfasst, wobei die Zwischenschicht (4) zwischen der Feder (2) und der Federaufnahme (3) angeordnet ist,
wobei die Zwischenschicht (4) mit der Feder (2), insbesondere der Beschichtung, auf der der Feder (2) zugewandten Seite wenigstens stoffschlüssig verbunden ist und die Zwischenschicht (4) auf der der Feder (2) abgewandten Seite an der Federaufnahme (3) ganz oder teilweise anliegt und eine andere als eine stoffschlüssige Verbindung mit der Federaufnahme (3) aufweist, wobei die andere als eine stoffschlüssige Verbindung eine formschlüssige Verbindung ist, wobei die formschlüssige Verbindung ausgebildet ist mit einem positiv-Element und einer negativ-Aufnahme, welche das positive-Element aufnimmt, wobei die Zwischenschicht als positiv-Element aufgenommen ist in Kavitäten der Federaufnahme, welche die negativ-Aufnahme ausbilden oder wobei Vorsprünge mit Hinterschneidungen der Federaufnahme das positiv-Element ausbilden, und Kavitäten in der Zwischenschicht die negativ-Aufnahme ausbilden, wobei die Federaufnahme ausgebildet ist, sich auf einem Federteller abzustützen, **dadurch gekennzeichnet, dass** die Federaufnahme einen klebstoffabweisenden Aufnahmebereich für die Feder aufweist.

2. Federanordnung (1) nach Anspruch 1, **dadurch gekennzeichnet, dass** die andere als eine stoffschlüssige Verbindung die formschlüssige Verbindung und eine kraftschlüssige Verbindung ist.

3. Federanordnung (1) nach einem der Ansprüche 1 bis 2, **dadurch gekennzeichnet, dass** die Federaufnahme (3) aus einem Kunststoff, insbesondere einem elastischen Kunststoff ausgewählt ist aus einer Gruppe von Elastomeren oder elastomerhaltigen Kunststoffen, insbesondere Polyurethan, Acrylnitril-Butadien-Acrylat, Acrylnitril-chloriertes Polyethylen-Styrol, Acrylnitril-Methylmethacrylat, Butadien-Kautschuk, Butylkautschuk, Chloropren-Kautschuk, Ethylen-Ethylacrylat-Copolymer, Ethylen-Propylen-Dien-Kautschuk, Ethylenvinylacetat, Fluorkautschuk, Isopren-Kautschuk, Naturkautschuk, Polyisobutylen, Polyvinylbutyral, Silikon-Kautschuk, Styrol-Butadien-Kautschuk, Vinylchlorid-Ethylen, Vinylchlorid-Ethylen-Methacrylat oder einer Kombination hiervon.

4. Federanordnung (1) nach einem der Ansprüche 1 bis 3, **dadurch gekennzeichnet, dass** die Zwischenschicht (4) elastisch ausgebildet ist, insbesondere ein elastischer Dichtstoff, ein elastischer Klebstoff oder eine Kombination hiervon ist, insbesondere eine Zusammensetzung umfasst, welche ausgewählt ist aus einer Gruppe von Acrylaten, Epoxidharzen, Polyurethanen, Silikonen, Silan-Hybridsystemen, Polysulfiden oder einer Kombination hiervon.

5. Federanordnung (1) nach einem der Ansprüche 1 bis 4, **dadurch gekennzeichnet, dass** die Härte der Zwischenschicht (4) geringer ist als die Härte einer Beschichtung der Feder (2).

6. Federanordnung (1) nach einem der Ansprüche 1 bis 5, **dadurch gekennzeichnet, dass** die Härte der Zwischenschicht (4) maximal 70 Shore-D beträgt.

7. Federanordnung (1) nach einem der Ansprüche 1 bis 6, **dadurch gekennzeichnet, dass** die Zwischenschicht (4) eine Bruchdehnung von mindestens 5%, insbesondere von mindestens 50%, vorzugsweise von mindestens 100% aufweist.

8. Federanordnung (1) nach einem der Ansprüche 1 bis 7, **dadurch gekennzeichnet, dass** die Zwischenschicht (4) eine Dicke im Bereich von 0,1mm bis 10,0 mm, vorzugsweise im Bereich von 0,2 mm bis 7,0 mm, besonders bevorzugt im Bereich von 0,3mm bis 5mm, ganz besonders bevorzugt im Bereich von 0,4mm bis 1,5mm aufweist.

9. Federanordnung (1) nach einem der Ansprüche 1 bis 8, **dadurch gekennzeichnet, dass** zusätzlich Abstandhalter (5, 5', 5") vorgesehen sind, mit denen eine Oberfläche der Beschichtung und eine Oberfläche der Federaufnahme (3) beabstandet voneinander gehalten werden, wobei der zwischen der Oberfläche der Beschichtung und der Oberfläche der Federaufnahme (3) gebildete Raum zumindest weitestgehend mit der Zwischenschicht (4) ausgefüllt ist.

10. Federanordnung (1) nach Anspruch 9, **dadurch gekennzeichnet, dass** die Abstandhalter (5, 5', 5") derart verteilt angeordnet sind, dass die Feder (2) und die Federaufnahme (3) in axiale Richtung und/oder in radiale Richtung in Bezug auf die Federachse relativ zueinander ausgerichtet sind.

11. Federanordnung (1) nach Anspruch 10, **dadurch gekennzeichnet, dass** die Abstandhalter (5, 5', 5") in Form von Vorsprüngen gestaltet sind, die von der Oberfläche der Federaufnahme (3) abstehen.

12. Federanordnung (1) nach einem der Ansprüche 1 bis 11, **dadurch gekennzeichnet, dass** die Federaufnahme (3) derart gestaltet ist, dass die Feder (2), im Querschnitt durch den Federdraht betrachtet, über einen Umschlingungswinkelbereich von mindestens 30°, vorzugsweise von mindestens 100° in der Federaufnahme (3) aufgenommen und mittels der Zwischenschicht (4) mit der Federaufnahme (3) formschlüssig verbunden ist, wobei die Zwischenschicht (4) in dem Umschlingungsbereich im Wesentlichen eine konstante Dicke aufweist.

13. Fahrzeugfahrwerk umfassend eine Federanordnung (1) nach einem der Ansprüche 1 bis 12.

14. Verfahren zur Herstellung einer Federanordnung (1) für ein Fahrzeugfahrwerk mit einer Feder (2) und einer Federaufnahme (3), insbesondere gemäß einem der Ansprüche 1 bis 12 umfassend die folgenden Schritte:
a) Bereitstellen einer Feder (2), insbesondere mit einer Beschichtung;
b) Bereitstellen einer Federaufnahme (3) mit einem klebstoffabweisenden Aufnahmebereich zur Aufnahme der in Schritt a) bereitgestellten Feder (2);
c) Bereitstellen eines Füllmittels;
d) Auftragen des in Schritt c) bereitgestellten Füllmittels auf die in Schritt a) bereitgestellte Feder (2) und/oder den klebstoffabweisenden Aufnahmebereich der in Schritt b) bereitgestellten Federaufnahme (3);
e) Herstellen einer Zwischenschicht (4) zwischen der Feder (2) und der Federaufnahme (3) durch in Kontakt bringen
i. der in Schritt a) bereitgestellten Feder (2) mit dem in Schritt d) mit Füllmittel aufgetragenen klebstoffabweisenden Aufnahmebereich der Federaufnahme (3) oder
ii.der in Schritt d) mit Füllmittel aufgetragenen Feder (2) mit dem klebstoffabweisenden Aufnahmebereich der in Schritt b) bereitgestellten Federaufnahme (3) oder
iii. der in Schritt d) mit Füllmittel aufgetragenen Feder (2) mit dem in Schritt d) mit Füllmittel aufgetragenen klebstoffabweisenden Aufnahmebereich der Federaufnahme (3);
f) Ausbilden einer stoffschlüssigen Verbindung, insbesondere einer Klebeverbindung zwischen der in Schritt e) hergestellten Zwischenschicht (4) mit der Feder (2),
**dadurch gekennzeichnet, dass** zwischen der Federaufnahme (3), insbesondere des klebstoffabweisenden Aufnahmebereichs und der in Schritt e) hergestellten Zwischenschicht (4) eine andere Verbindung als eine stoffschlüssige Verbindung erfolgt.

## Claims

1. A spring assembly (1) for a vehicle chassis, wherein the spring assembly comprises a spring (2), in particular having a coating, a spring support (3) and an intermediate layer (4), wherein the intermediate layer (4) is arranged between the spring (2) and the spring support (3),
wherein
the intermediate layer (4) is at least materially connected to the spring (2), in particular to the coating on the side facing the spring (2), and the intermediate layer (4) lies entirely or partially against the spring support (3) on the side facing away from the spring (2) and is connected to the spring support (3) by a connection other than a material connection, wherein the connection other than a material connection is a positive connection, wherein the positive connection is designed with a positive element and a negative receptacle, which receives the positive element, wherein the intermediate layer is received as a positive element in cavities of the spring support, which form the negative receptacle or, wherein projections with undercuts of the spring support form the positive element and cavities in the intermediate layer form the negative receptacle, wherein the spring assembly is configured to be supported by a spring seat, **characterized in that** the spring support comprises an adhesive-repellent supporting region for supporting the spring.

2. The spring assembly (1) as claimed in claim 1, **characterized in that** the connection other than a material connection is the positive connection and a nonpositive connection.

3. The spring assembly (1) as claimed in any of claims 1 to 2, **characterized in that** the spring support (3) is made of a plastic, in particular a flexible plastic, selected from a group of elastomers or elastomer-containing plastics, in particular polyurethane, acrylonitrile-butadiene acrylate, acrylonitrile-chlorinated polyethylene styrene, acrylonitrile-methyl methacrylate, butadiene rubber, butyl rubber, chloroprene rubber, ethylene-ethyl acrylate copolymer, ethylenepropylene-diene rubber, ethylene-vinyl acetate, fluororubber, isoprene rubber, natural rubber, polyisobutylene, polyvinylbutyral, silicone rubber, styrene-butadiene rubber, vinyl chloride-ethylene, vinyl chloride-ethylene methacrylate or a combination thereof.

4. The spring assembly (1) as claimed in any of claims 1 to 3, **characterized in that** the intermediate layer (4) is of elastic design, in particular is an elastic sealant, an elastic adhesive or a combination thereof, in particular comprises a composition which is selected from a group of acrylates, epoxy resins, polyurethanes, silicones, silane hybrid systems, polysulfides or a combination thereof.

5. The spring assembly (1) as claimed in any of claims 1 to 4, **characterized in that** the hardness of the intermediate layer (4) is less than the hardness of a coating of the spring (2).

6. The spring assembly (1) as claimed in any of claims 1 to 5, **characterized in that** the hardness of the intermediate layer (4) is at most 70 Shore D.

7. The spring assembly (1) as claimed in any of claims 1 to 6, **characterized in that** the intermediate layer (4) has an elongation at break of at least 5%, in particular of at least 50%, preferably of at least 100%.

8. The spring assembly (1) as claimed in any of claims 1 to 7, **characterized in that** the intermediate layer (4) has a thickness in the range of from 0.1 mm to 10.0 mm, preferably in the range of from 0.2 mm to 7.0 mm, particularly preferably in the range of from 0.3 mm to 5 mm, very particularly preferably in the range of from 0.4 mm to 1.5 mm.

9. The spring assembly (1) as claimed in any of claims 1 to 8, **characterized in that** spacers (5, 5', 5") are additionally provided, by means of which a surface of the coating and a surface of the spring support (3) are held at a distance from one another, wherein the space formed between the surface of the coating and the surface of the spring support (3) is at least very largely filled with the intermediate layer (4).

10. The spring assembly (1) as claimed in claim 9, **characterized in that** the spacers (5, 5', 5") are arranged in a distributed manner in such a way that the spring (2) and the spring support (3) are aligned relative to one another in the axial direction and/or in the radial direction with respect to the spring axis.

11. The spring assembly (1) as claimed in claim 10, **characterized in that** the spacers (5, 5', 5") are configured in the form of projections which project from the surface of the spring support (3).

12. The spring assembly (1) as claimed in any of claims 1 to 11, **characterized in that** the spring support (3) is configured in such a way that, when viewed in cross section through the spring wire, the spring (2) is received in the spring support (3) over a contact angle range of at least 30°, preferably of at least 100°, and is connected positively to the spring support (3) by means of the intermediate layer (4), wherein the intermediate layer (4) has substantially a constant thickness in the contact region.

13. A vehicle chassis comprising a spring assembly (1) as claimed in any of claims 1 to 12.

14. A method for producing a spring assembly (1) for a vehicle chassis with a spring (2) and a spring support (3), in particular according to any of claims 1 to 12, comprising the following steps:
a) providing a spring (2), in particular having a coating;
b) providing a spring support (3) having an adhesive-repellent supporting region for supporting the spring (2) provided in step a);
c) providing a filler;
d) applying the filler provided in step c) to the spring (2) provided in step a) and/or to the adhesive-repellent supporting region of the spring support (3) provided in step b);
e) producing an intermediate layer (4) between the spring (2) and the spring support (3) by bringing into contact
i. the spring (2) provided in step a) with the adhesive-repellent supporting region of the spring support (3), to which supporting region filler has been applied in step d), or
ii. the spring (2), to which filler has been applied in step d), with the adhesive-repellent supporting region of the spring support (3) provided in step b), or
iii. the spring (2), to which filler has been applied in step d), with the adhesive-repellent supporting region of the spring support (3), to which supporting region filler has been applied in step d);
f) forming a material connection, in particular an adhesive connection, between the intermediate layer (4) produced in step e) and the spring (2),
**characterized in that** a connection other than a material connection is formed between the spring support (3), in particular the adhesive-repellent supporting region, and the intermediate layer (4) produced in step e).

## Revendications

1. Ensemble de ressort (1) pour un châssis de véhicule, l'ensemble de ressort comprenant un ressort (2), en particulier ayant un revêtement, un support de ressort (3) et une couche intermédiaire (4), la couche intermédiaire (4) étant disposée entre le ressort (2) et le support de resort (3),
dans lequel
la couche intermédiaire (4) est au moins liée matériellement au ressort (2), en particulier au revêtement du côté faisant face au ressort (2), et la couche intermédiaire (4) repose entièrement ou partiellement contre le support de ressort (3) du côté opposé au ressort (2) et est reliée au support de ressort (3) par une liaison autre qu'une liaison matérielle, la liaison autre qu'une liaison matérielle étant une liaison positive, la liaison positive étant conçue avec un élément positif et un logement négatif, qui reçoit l'élément positif, la couche intermédiaire étant reçue comme élément positif dans des cavités du support de ressort, lesquelles forment le logement négatif ou, des projections avec des contre-dépouilles du support de ressort formant l'élément positif et des cavités dans la couche intermédiaire formant le logement négatif, l'ensemble de ressort étant configuré pour être supporté par un siège de ressort, **caractérisé en ce que** le support de ressort comprend une région de support répulsive à l'adhésif pour supporter le ressort.

2. Ensemble de ressort (1) selon la revendication 1, **caractérisé en ce que** la liaison autre qu'une liaison matérielle est la liaison positive et une liaison non positive.

3. Ensemble de ressort (1) selon l'une quelconque des revendications 1 à 2, **caractérisé en ce que** le support de ressort (3) est constitué d'une matière plastique, en particulier une matière plastique flexible, sélectionnée dans un groupe d'élastomères ou de matières plastiques contenant des élastomères, en particulier polyuréthane, acrylonitrile-butadiène acrylate, acrylonitrile-polyéthylène chloré styrène, acrylonitrile-méthacrylate de méthyle, caoutchouc butadiène, caoutchouc butyle, caoutchouc chloroprène, copolymère éthylène-acrylate d'éthyle, caoutchouc éthylène-propylène-diène, éthylène-acétate de vinyle, fluorocaoutchouc, caoutchouc isoprène, caoutchouc naturel, polyisobutylène, polyvinylbutyral, caoutchouc silicone, caoutchouc styrène-butadiène, chlorure de vinyle-éthylène, chlorure de vinyle-éthylène méthacrylate ou une combinaison de ceux-ci.

4. Ensemble de ressort (1) selon l'une quelconque des revendications 1 à 3, **caractérisé en ce que** la couche intermédiaire (4) est de conception élastique, en particulier est un matériau d'étanchéité élastique, un adhésif élastique ou une combinaison de ceux-ci, comprenant en particulier une composition qui est sélectionnée dans un groupe d'acrylates, résines époxy, polyuréthanes, silicones, systèmes hybrides silanes, polysulfures ou une combinaison de ceux-ci.

5. Ensemble de ressort (1) selon l'une quelconque des revendications 1 à 4, **caractérisé en ce que** la dureté de la couche intermédiaire (4) est inférieure à la dureté d'un revêtement du ressort (2).

6. Ensemble de ressort (1) selon l'une quelconque des revendications 1 à 5, **caractérisé en ce que** la dureté de la couche intermédiaire (4) est au maximum de 70 Shore D.

7. Ensemble de ressort (1) selon l'une quelconque des revendications 1 à 6, **caractérisé en ce que** la couche intermédiaire (4) présente un allongement à la rupture d'au moins 5 %, en particulier d'au moins 50 %, de préférence d'au moins 100 %.

8. Ensemble de ressort (1) selon l'une quelconque des revendications 1 à 7, **caractérisé en ce que** la couche intermédiaire (4) présente une épaisseur dans la plage de 0,1 mm à 10,0 mm, de préférence dans la plage de 0,2 mm à 7,0 mm, plus préférablement dans la plage de 0,3 mm à 5 mm, très particulièrement préférablement dans la plage de 0,4 mm à 1,5 mm.

9. Ensemble de ressort (1) selon l'une quelconque des revendications 1 à 8, **caractérisé en ce que** des entretoises (5, 5', 5") sont en outre prévues, au moyen desquelles une surface du revêtement et une surface du support de ressort (3) sont maintenues à distance l'une de l'autre, l'espace formé entre la surface du revêtement et la surface du support de ressort (3) étant au moins très largement rempli avec la couche intermédiaire (4).

10. Ensemble de ressort (1) selon la revendication 9, **caractérisé en ce que** les entretoises (5, 5', 5") sont disposées de manière distribuée de telle sorte que le ressort (2) et le support de ressort (3) soient alignés l'un par rapport à l'autre dans la direction axiale et/ou dans la direction radiale par rapport à l'axe du ressort.

11. Ensemble de ressort (1) selon la revendication 10, **caractérisé en ce que** les entretoises (5, 5', 5") sont configurées sous la forme de projections qui font saillie depuis la surface du support de ressort (3).

12. Ensemble de ressort (1) selon l'une quelconque des revendications 1 à 11, **caractérisé en ce que** le support de ressort (3) est configuré de telle sorte que, vu en coupe transversale à travers le fil du ressort, le ressort (2) soit reçu dans le support de ressort (3) sur une plage d'angle de contact d'au moins 30°, de préférence d'au moins 100°, et soit relié positivement au support de ressort (3) au moyen de la couche intermédiaire (4), la couche intermédiaire (4) présentant sensiblement une épaisseur constante dans la région de contact.

13. Châssis de véhicule comprenant un ensemble de ressort (1) selon l'une quelconque des revendications 1 à 12.

14. Procédé de production d'un ensemble de ressort (1) pour un châssis de véhicule avec un ressort (2) et un support de ressort (3), en particulier selon l'une quelconque des revendications 1 à 12, comprenant les étapes suivantes :
a) fourniture d'un ressort (2), en particulier ayant un revêtement;
b) fourniture d'un support de ressort (3) ayant une région de support répulsive à l'adhésif pour supporter le ressort (2) fourni à l'étape a);
c) fourniture d'un matériau de remplissage;
d) application du matériau de remplissage fourni à l'étape c) au ressort (2) fourni à l'étape a) et/ou à la région de support répulsive à l'adhésif du support de ressort (3) fourni à l'étape b);
e) production d'une couche intermédiaire (4) entre le ressort (2) et le support de ressort (3) par mise en contact
i. du ressort (2) fourni à l'étape a) avec la région de support répulsive à l'adhésif du support de ressort (3), à laquelle région de support le matériau de remplissage a été appliqué à l'étape d), ou
ii. du ressort (2), auquel le matériau de remplissage a été appliqué à l'étape d), avec la région de support répulsive à l'adhésif du support de ressort (3) fournie à l'étape b), ou
iii. du ressort (2), auquel le matériau de remplissage a été appliqué à l'étape d), avec la région de support répulsive à l'adhésif du support de ressort (3), à laquelle région de support le matériau de remplissage a été appliqué à l'étape d);
f) formation d'une liaison matérielle, en particulier une liaison adhésive, entre la couche intermédiaire (4) produite à l'étape e) et le ressort (2),
**caractérisé en ce qu'**une liaison autre qu'une liaison matérielle est formée entre le support de ressort (3), en particulier la région de support répulsive à l'adhésif, et la couche intermédiaire (4) produite à l'étape e).
